# EUROPEAN PATENT SPECIFICATION

(11) **EP 2 905 548 B1**
(45) Date of publication and mention of the grant of the patent: **22.03.2023**
(21) Application number: 15152016.0
(22) Date of filing: 21.01.2015
(51) Int. Cl.: F24F 12/00

(54) **A heat exchanger bypass apparatus**
Wärmetauscherbypassvorrichtung
Appareil de dérivation d'échangeur de chaleur

(30) Priority: 29.01.2014 GB 201401514
(43) Date of publication of application: 12.08.2015
(73) Proprietor: Polypipe Limited, Holbeck Leeds LS11 5AE (GB)
(72) Inventor: Jenkins, Richard, Caerphilly, Mid Glamorgan CF83 1NA (GB); Morgan, Gareth, Caerphilly, Mid Glamorgan CF83 1NA (GB)
(74) Representative: Murgitroyd & Company

(56) References cited:
- WO-A2-2012/011865
- CA-A1- 2 485 786
- US-A- 4 766 807
- US-A1- 2012 064 818
- US-A1- 2013 048 267

## Description

The present invention relates to a heat exchanger bypass apparatus for use in a ventilation unit in which heat recovery is utilised.

Heat exchanger devices, sometimes referred to as heat recovery units or recuperators, are well known in the ventilation industry and are commonly used to transfer heat available in an extract airstream to the fresh air supply airstream, rather than losing this heat to the outside environment. The exchange of heat between the inlet and outlet airstreams raises the temperature of the incoming air, thereby providing heating to any room to which the air is supplied and reducing or obviating any additional heating required to raise the temperature of that room.

Although the heat recovery process is beneficial in many operating conditions, it is not always required. In summer months in particular the internal temperature of the property may exceed the desired temperature due to additional heating effects such as passive solar heating, without any active heat provision. In such an event, it is undesirable to further heat the property by transferring heat to the incoming air via the heat exchanger. Therefore provision needs to be made to allow for the heat exchanger device to be bypassed. This provision is commonly made by providing a bypass channel to enable the incoming airstream to bypass the heat exchange air passages of the heat exchanger.

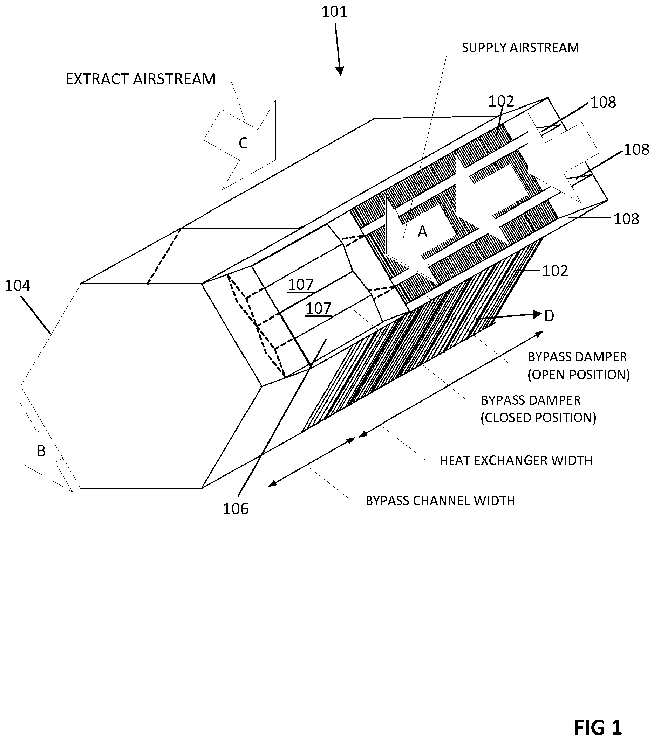

A typical prior art heat exchanger device 101 is shown schematically in Figure 1 which comprises a stack of spaced apart thin plates 102 arranged to provide separate air flow path arrays such that the two air streams at different temperatures can flow between the plates across the heat exchanger device between separate inlet and outlet sides for each air flow path array. The plates 102 are arranged such that heat is transferred from the warmer stream passing in the first array, through the plate material by conduction, to the cooler stream passing in the second flow path array. In the recuperators heat exchanger device the plates are arranged and the air passages alternately sealed so that the air streams are separated into the separate air flow path arrays and do not mix. Figure 1 shows the cooler external supply airstream at arrow A that exits the heat exchanger into the property at arrow B. The warmer extract airstream enters the heat exchanger device at arrow C and exits at arrow D. The bypass 106 is situated alongside the supply inlet and includes shutters or dampers 107 arranged to open and close the bypass air channel to selectively permit air to bypass the heat exchanger so that air entering the property is unheated by the exiting airstream.

A bypass arrangement typically comprises a separate channel arranged alongside the inlet heat exchanger having an inlet in common fluid communication with the incoming airstream. The bypass channel includes a damper arranged to open and close the channel. With the damper in the closed position all of the airflow is directed through the heat exchanger. With the damper in the open position the airstream is able to flow through the bypass channel. As the bypass channel is significantly wider than any individual airflow passage of the heat exchanger, the bypass channel is the path of least resistance and as such the majority of the airstream flows through the bypass when open. The heat exchanger may additionally be provided with a damper to close the heat exchanger when the bypass is opened.

In normal operation with the heat exchanger open and the bypass closed it is important to maximise the airflow through the heat exchanger in order to maximise efficiency of heat transfer. Any airflow though the closed bypass represents a portion of the incoming airflow that enters the property unheated and therefore leads to a loss of efficiency. Such losses are experienced where low tolerances result in gaps between the edges of the damper and the walls of the bypass channel.

Other disadvantages of the prior art bypass arrangements include an increase in assembly time due to the number of parts comprising the damper arrangement and associated actuator. Access to the actuator also presents problems to maintenance operatives as the actuator is mounted outside the bypass channel in order to avoid interference with the airstream, which requires the bypass arrangement to be removed before the actuator, which is typically an electrical motor drive, can be accessed for repair of replacement.

WO 2012/011865 A2 discloses a heat exchanger bypass apparatus according to the preamble of claim 1.

CA2485786 A1 discloses the constructional details of a damper system for controlling airflow in a duct.

It is therefore desirable to provide an improved heat exchanger bypass apparatus which addresses the above described problems and/or which offers improvements generally. According to the present invention there is provided a heat exchange ventilation unit heat exchanger bypass apparatus as described in the accompanying claims.

In an embodiment of the invention there is provided a heat exchanger bypass apparatus comprising an enclosure having a bypass inlet and a bypass outlet for fluid communication with the air supply inlet and the air supply outlet of a ventilation unit respectively. A bypass air channel within the enclosure extends between the bypass inlet and bypass outlet. A rotatable damper is located within the bypass air channel arranged to rotate between and open and closed position in which it opens and closes the bypass air channel respectively. Sealing ridges are located on opposing sides of the bypass air channel, with the ridges and the rotatable damper being arranged such the damper engages and sealingly abuts the sealing ridges when in the closed position to close and seal the bypass air channel. First and second internal partition walls extending in the longitudinal direction of the bypass air channel with the first internal partition wall extending between the lower edges of the bypass inlet and bypass outlet and the second internal partition wall extending between the upper edges of the bypass inlet and bypass outlet, the first and second internal partition walls have a curved wave form configured to minimise turbulence within the bypass channel and each defining a chamber within the enclosure that is isolated from the bypass air channel.

The sealing ridges advantageously obviate the requirement for a close tolerance between the edges of the blade and the inner walls of the bypass channel, which is required in the arrangements of the prior art in order to minimise the gap between the outer edges of the blade and the walls of the bypass channel. Sealing is instead being achieved by face contact between the damper blade and the sealing ridges, rather than edge contact which requires extremely close tolerances.

The bypass channel preferably comprises opposing parallel walls defining part of said channel with the damper being arranged such the axis of rotation is parallel with said walls and transverse to the longitudinal axis of bypass channel defining the direction of flow. In the closed position the damper extends transversely across the width of the channel, and the sealing ridges are located at corresponding locations along the length of the bypass channel coincident with damper in a longitudinally offset arrangement relative to the direction of flow substantially equal to the width of the tips of the damper blade, such that the sealing ridges engage opposing faces of opposing sides of the damper when the damper rotates to the closed position. The offset arrangement allows the sealing edges of the damper blade to seat flush against the sealing ridges in a parallel arrangement, avoiding edge contact and providing a more effective seal.

The damper blade may comprise at least two sealing strips extending length wise along the damper blade, the sealing strips being located at the outer edges on opposing sides and opposing faces of the damper blade such that they engage and seal against the sealing ridges when the damper blade is in the closed position. The sealing strips are preferably formed of a resilient compressible material such as silicone foam to optimise sealing

The enclosure includes an internal partition defining a chamber within the enclosure that is isolated from the bypass air channel, and an actuator arranged to rotate the damper between the open and closed positions, the actuator being housed within the chamber. Housing the actuator, which is preferably an electric motor, within the chamber provides a self-contained and compact bypass unit with the partition preventing the actuator from disrupting airflow through the channel. The actuator may also be easily accessed by removing a front panel of the bypass unit rather than having to remove the entire unit.

The first chamber is preferably located proximate a first end of the damper and the second chamber is located on the opposing side of the enclosure proximate the second end of the damper and contains a rotational mounting such as bush within which a projection extending from the second end of the damper is rotationally received.

The damper blade is preferably a one piece plastic moulded component having integrally formed projections extending axially from either end defining spindles for rotationally mounting the blade to the actuator and bush. Forming the blade as a single component simplifies assembly and reduces part numbers and cost.

The sealing ridges may extend between the first and second partitions to ensure the channel is sealed across its entire height.

At least one of the damper blade and the sealing ridges may include one or more magnetic elements, with the other of the damper blade and the sealing ridges including a corresponding magnetic element and/or ferrous element aligned with the magnets such that when the damper blade engages the sealing ridges one or more of the sealing edges of the damper blade is held in abutment with the one or more sealing ridge via magnetic force.

Preferably at least one of the sealing edges of the blade includes one or magnets located between the sealing edge and the corresponding sealing strip. The at least one sealing strip may include at least one aperture for receiving the at least one magnet. The at least one aperture may extend entirely through the sealing strip to expose the at least one magnet at the outer surface of the sealing strip.

The partition walls extend in the longitudinal direction of the bypass channel with the first partition wall extending between the lower edges of the bypass inlet and bypass outlet and the second partition extending between the upper edges of the bypass inlet and bypass outlet. Preferably the first and second partitions have a curved wave form configured to minimise turbulence within the bypass channel. Preferably the wave forms are arranged and extend in substantially parallel arrangement.

The enclosure preferably comprises front and rear sections arranged transversely relative to the longitudinal axis of the bypass channel, the front and rear sections combining to form the enclosure and define the bypass channel. The front and rear sections are preferably moulded plastic components, with the side walls and internal partitions being integrally moulded parts of the front and rear panels. This two part moulded arrangement enables easy assembly and avoids the requirement for separate manufacture and securement of the internal features of the enclosure.

Stanchions may be provided that extend from an inner wall of at least one of the front and rear sections and located within the bypass channel to support and maintain separation between the front and rear sections. The stanchions preferably taper inwardly in the longitudinal direction of the bypass channel in both directions, for example defining en elliptical or diamond shape, to minimise disruption to the airflow through the bypass channel.

The present invention will now be described by way of example only with reference to the following illustrative figures in which:
Figure 1 shows a heat exchanger of the prior art;
Figure 2 is a heat exchange ventilation unit according to an embodiment of the present invention;
Figure 3 is an exploded view of the heat exchanger bypass of the arrangement of Figure 2; and
Figure 4 is an assembled view of the bypass of Figure 3 with the front panel removed for illustrative purposes.

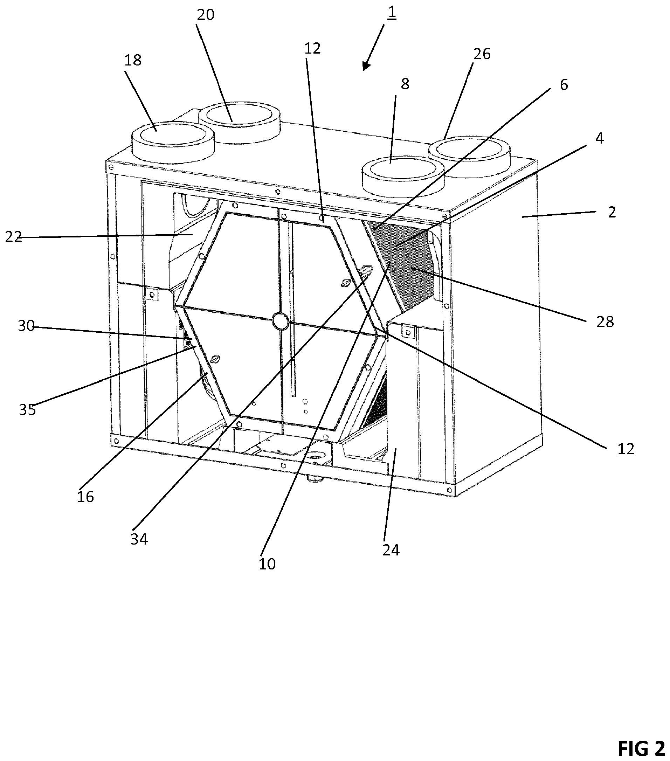

Referring to Figure 2, there is provided a mechanical ventilation heat recovery unit (MVHR) 1 includes a housing 2 containing a heat exchanger 4 that is similar in construction to the above described prior art heat exchanger. The heat exchanger 4 comprises a stack of spaced apart thin plates 6 arranged to provide separate air flow path arrays (passage arrays) such that two air streams at different temperatures can flow between the plates across the heat exchanger 4 between separate inlet and outlet sides for each air flow path array. The plates 6 are arranged such that heat is transferred from the warmer stream passing in the first array, through the intervening plate 6 material by conduction, to the cooler stream passing in the second flow path array.

In the heat exchanger 2 the plates 6 are arranged and the air channels alternately sealed so that the air streams are separated into the separate air flow path arrays and do not mix. This provides a first fluid flow path array comprising a plurality of fluid channels having a first fluid inlet side to the heat exchanger device and first fluid outlet side from the heat exchanger device. A second fluid flow path array comprising a plurality of fluid channels through the heat exchanger device having a second fluid inlet side to the heat exchanger device and a second fluid outlet side from the heat exchanger device, the first and second fluid pathway arrays being in heat exchange contact, via intervening heat exchange surfaces (i.e. the plate material).

Air from the external environment enters the MVHR unit 1 through the supply inlet 8 and passes to a supply inlet chamber 10 defined within the housing 2 between the housing 2 and the heat exchanger 4. Seals 12 isolate the supply inlet chamber 10 from the rest of the housing 2. Air is drawn through the heat exchanger 4 from the inlet chamber 10 and into an outlet chamber 14 on the opposing side of the heat exchanger 4 by an inlet fan 16 and then passes into the inlet duct for the property via the MVHR outlet 18. In a similar manner, air from with the property is drawn into the unit 1 through the vent inlet 20 and into the vent inlet chamber 22. This air is then drawn through the heat exchanger 2 by fan 24 and expelled through the vent outlet 26.

The heat exchanger 4 is hexagonal in shape, with one of the faces defining a supply inlet 28 and the diametrically opposing face defining the supply outlet 30. A bypass apparatus 32 is arranged axially adjacent the heat exchanger 4. The bypass 32 has a corresponding hexagonal shape and abuts a side face of the heat exchanger 4 with the bypass 32 being arranged on one side of the heat exchanger 4 between the heat exchanger 4 and the housing 2 in the front to back direction. Preferably the bypass 32 is arranged between the heat exchanger 4 and the front face of the housing 2. The bypass 32 includes a supply inlet 34 that is arranged adjacent and coplanar with the supply inlet 28 of the heat exchanger in open fluid communication with the supply inlet chamber 10. The supply outlet 35 of the bypass 32 is located on the diametrically opposed side of the bypass 32 coplanar and adjacent with the supply outlet 30 of the heat exchanger 4 in open fluid communication with the supply outlet chamber 14.

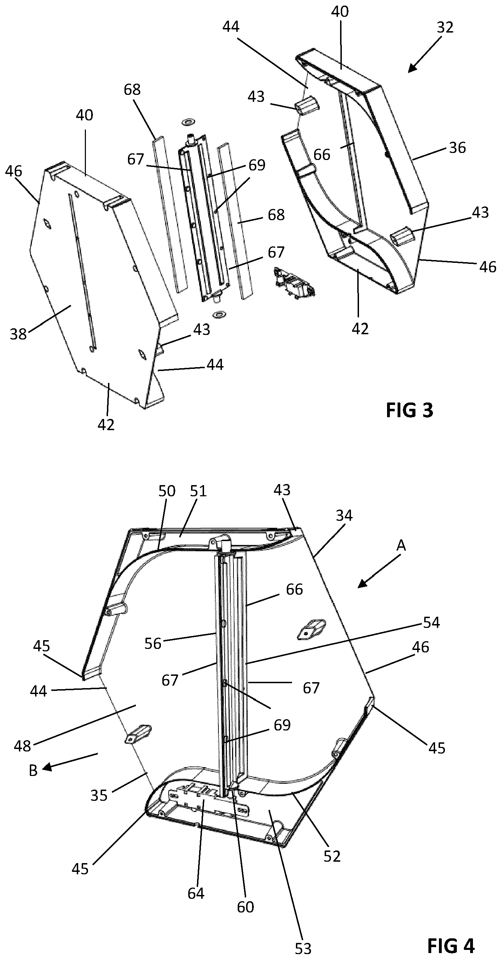

As shown in Figure 3, the bypass 32 includes a front panel 36 and a rear panel 38, each of which are of the same hexagonal shape and size as the side panels of the heat exchanger 4. The front panel 36 and rear panel 38 both include an upper side wall section 40 projecting perpendicularly inwards from two of the upper edges of the front panel 36. A lower side wall section 42 extends from the diametrically opposing side edges of the front panel 36. The upper side wall sections 40 and lower side wall sections 42 have a uniform width along their length and are arranged such that when the front panel 36 and rear panel 38 are brought together the side wall sections abut and hold the front and rear panels 36 and 38 in a parallel spaced arrangement. The combined width of the corresponding abutting side wall sections defines the width of the spacing between the front and rear panels 36 and 38.

In addition to the side wall sections 40 and 42, the internal faces of the front and rear panels 36 and 38 include stanchions 43 which project inwardly to the same distance as the side walls 40 and 42. The stanchions 43 of the front and rear panels 36 and 38 are aligned such that each stanchion abuts with a corresponding stanchion 43 on the opposing panel when the panels 36 and 38 are brought together. The stanchions 43 provide additional reinforcement to maintain the spacing of the front and rear panels 36 and 38. The stanchions 43 comprise and elliptical or diamond shape, with the edges tapering in the upstream and downstream directions. In this way, any disruption of the airflow through the flow channel 48 by the stanchions 43 is minimised.

The remaining two side edges 42 and 44 of the front and rear side panels 36 and 38 between the upper and lower side wall section 40 and 42 do not include side wall sections and instead define diametrically opposed openings between the upper wall section 40 and the lower side wall section 42. Each side wall section 40 and 42 extends along two adjacent sides of the respective panel 36 and 38 having free ends 43 that terminate at and define the openings 44 and 46. When the front and rear panels 36 and 38 are brought together, the openings 42 and 44 extend the full width of the spacing of the two panels 36 and 38. The first opening 44 defines the supply inlet 34 and the second opening 46 defines the supply outlet 36. A bypass channel 48 is defined between the front and rear panels 36 and 38 extending between the supply inlet 34 and supply outlet 36.

As shown in Figure 4, upper and lower partition walls 50 and 52 extend internals between the distal open edges 43 and 45 of the upper and lower side wall sections 40 and 42 respectively. The partition walls 50 and 52 have a curved waveform shape. Voids 51 and 53 are defined between the partition walls 50 and 52 and the corresponding side wall sections 40 and 42 respectively. The upper partition wall 50 curves away from the side wall section 40 in the direction away from the open edge 43 and then curves inwardly back towards the side wall section proximate the opposing open edge 45. The lower partition wall 52 conversely curves away from the side wall section 42 in the opposing direction away from the open edge 45 that defines the outlet and then curves inwardly back towards the side wall section 42 proximate the opposing open edge 43. The waveform shape of the partition walls 50 and 52 ensures smooth airflow through the bypass channel 48, avoid the internal angles defined by the upper and lower side walls 50 and 52 thereby minimising turbulence and improving efficiency in the bypass mode.

Airflow through the bypass apparatus 12 is controlled by a damper 54. The damper 54 is arranged within the bypass flow channel 48 transversely to the direction of flow through the channel 48. The damper 54 includes a damper blade 56 that length wise extends substantially vertically between the upper partition wall 50 and lower partition wall 52. In the transverse width wise direction the blade 56 extends across the channel between the front and rear panels 36 and 38. The longitudinal axis of the damper blade 54 defines the axis of rotation. The damper blade 56 is an integrally moulded component comprising a blade section 58 and coaxial cylindrical projections 60 extending from either end or rotationally mounting the damper blade 56. The rotational axis is located centrally width wise across the blade section 58 and centrally within the damper channel 48. A cylindrical bush 62 is housed within the upper void 51 with the bore of the bush being coaxial with the rotational axis of the damper blade 56 and configured to rotationally receive the upper projection 60 of the blade 56. As the projection 60 is received within the void, the upper edges of the blade 56 are able to abut the outer surface of the upper partition panel 50 to seal there against or to at least be arranged in a closely toleranced gap from the outer surface to minimising the spacing and hence any potential airflow therebetween.

The lower projection 60 similarly extends into the lower void 53. The lower projection 60 is connected to the rotational drive of an actuator 64 housed within the void 53. The actuator is preferably an electric motor including control means for selectively controlling the rotational position of the damper blade. The actuator 60 and drive mechanism are advantageously housed within the void 53, which enables the actuator 60 to be easily accessed for maintenance by removal of the front panel 36, without having to remove the damper apparatus 12. In contrast, actuators of the prior art, which do include internal partitioning are typically mounted outside the damper apparatus. In the present invention the partition arrangement allows the actuator 64 to be mounted within the damper apparatus 1 but isolated from the airflow channel 48 so as to prevent interference with the airflow, and sealing issues.

A significant problem experienced by bypass dampers of the prior art is losses past the bypass damper when the damper is in the closed position, which may for example be due to low tolerances and gaps between the outer edges of the damper blades and the walls of the damper channel. The present invention addresses this problem by providing sealing ridges 66 that project from the inner surfaces of the front and rear panels 36 and 38 and extend vertically between the upper and lower partition walls 50 and 52. In the flow wise direction orthogonal to their length the ridges 66 are offset from each other. The ridges are arranged and configured to provide a sealing abutment surface for abutment with the damper blade 56 when in the closed position. The ridges 66 are offset by the width of the blade and arranged such that when the damper blade 56 is in the closed position extending transversely across and closing the flow channel 48 a first one of the ridges 66 is abutted by the damper blade on the downstream side of the blade 56, and the other is arranged to abut the blade 56 on the upstream side. This arrangement allows the blade 56 to be rotated into and away from engagement with the ridges.

The damper blade 56 is provided with sealing strips 68 located on opposing sides of the blade 56 at its outer sealing edges 67. The strips 68 are located on opposing faces of the blade 56 and are located to engage and seal with the corresponding sealing ridge along the entire length of the blade section 56. The sealing strips 68 are preferably formed of a resilient compressible sealing material such as silicone foam and are adhered or otherwise permanently secured to the damper blade 56. When the blade 56 is rotated to the closed position, the sealing strips 68 move into engagement with the sealing ridges 60 providing a seal between the blade 56 and the damper housing extending the entire height of the bypass channel 48. The sealing ridges 60 avoid the need for the edges of the blade to be closely toleranced as the gap between the outer edges of the blade and the walls of the bypass channel are now irrelevant from the point of sealing, with sealing instead being effected by face contact between the blade 56 and the sealing ridges 60.

A series of magnets 69 may be secured to the sealing edges 67. The magnets may be partially or fully recessed in the surface of the blade 56 and the sealing strips 68 may include corresponding recesses on their inner surfaces for partially or fully receiving the magnets 69. The magnets 69 located between the blade 56 and the sealing strips 68. The recesses of the sealing strips 68 may permit the magnets 69 to extend fully through the strips 68 to the outer sealing surface. The sealing ridges 66 may include a ferrous strips or ferrous elements aligned with the magnets, or a magnetic strip or magnetic elements (not shown) corresponding to the magnets 69. The magnets 69 thereby secure to the sealing ridges 66 via magnetic force to positively hold the blade 56 in the closed position and thereby assist sealing. The number and strength of the magnets 69 is selected to provide a magnetic sealing force that holds the blade 56 securely closed, while also being weak enough to be overcome by the motor to move the blade 56 to the open position.

Since in the majority of climate types where the beneficial use of heat recovery is indicated, the majority of operating time is spent in heat recovery mode, this method of bypass control may provide substantial advantages over conventional bypass methods by avoiding losses through the bypass channel when the bypass mode is not in operation, and by improving access to the bypass for maintenance.

## Claims

1. A heat exchanger bypass apparatus comprising:
an enclosure having a bypass inlet (34) and a bypass outlet (35) for fluid communication with the air supply inlet and the air supply outlet of a ventilation unit respectively;
a bypass air channel (48) within the enclosure extending between the bypass inlet (34) and bypass outlet (35);
a rotatable damper (54) located within the bypass air channel (45) arranged to rotate between an
open and closed position in which it opens and closes the bypass air channel (48) respectively; and
sealing ridges (66) located on opposing sides of the bypass air channel (48), with the ridges (66) and the rotatable damper (54) being arranged such the damper (54) engages and sealingly abuts the sealing ridges (66) when in the closed position to close and seal the bypass air channel (48);
**characterised by**:
first (50) and second (52) internal partition walls extending in the longitudinal direction of the bypass air channel (48) with the first internal partition wall (50) extending between the lower edges of the bypass inlet (34) and bypass outlet (35) and the second internal partition wall (52) extending between the upper edges of the bypass inlet (34) and bypass outlet (35), the first (50) and second (52) internal partition walls have a curved wave form configured to minimise turbulence within the bypass channel (48) and each defining a chamber (51,53) within the enclosure that is isolated from the bypass air channel (48).

2. A heat exchanger bypass apparatus according to claim 1 wherein an actuator is housed within the chamber (51) defined by the first internal partition wall (50) that is arranged to rotate the damper (54) between the open and closed positions.

3. A heat exchanger bypass apparatus according to claim 2 wherein the bypass channel (48) comprises opposing parallel walls defining part of said channel with the damper (54) being arranged such the axis of rotation is parallel with said walls and in the closed position the damper (54) extends transversely across the width of the channel (48), and wherein the sealing ridges (66) are located at corresponding locations along the length of the bypass channel (48) coincident with the damper (54) in an offset arrangement such that the sealing ridges (66) engage opposing faces of opposing sides of the damper (54) when the damper (54) rotates to the closed position.

4. A heat exchanger bypass apparatus according to claim 3 wherein a damper blade (56) comprises at least two sealing strips (68) extending length wise along the damper blade (56) the sealing strips (68) being located at the outer edges on opposing sides and opposing faces of the damper blade (56) such that they engage and seal against the sealing ridges (66) when the damper blade (56) is in the closed position.

5. A heat exchanger bypass apparatus according claim 4 wherein the first chamber (51) is located proximate a first end of the damper (54) and the second chamber (53) being located on the opposing side of the enclosure proximate the second end of the damper (54) and containing a rotational mounting within which a projection extending from the second end of the damper (54) is rotationally received.

6. A heat exchanger bypass apparatus according to any preceding claim wherein the sealing ridges (66) extend between the first and second internal partition walls.

7. A heat exchanger bypass apparatus according to any preceding claim wherein the enclosure comprises front and rear sections arranged transversely relative to the longitudinal axis of the bypass channel (48), the front and rear sections combining to form the enclosure and define the bypass channel (48).

8. A heat exchanger bypass apparatus according to claim 7 comprising stanchions (43) extending from an inner wall of at least one of the front and rear sections and located within the bypass channel (48) to support and maintain separation between the front and rear sections.

9. A heat exchanger bypass apparatus according to claim 8 wherein the stanchions (43) taper inwardly in the longitudinal direction of the bypass channel (48) in both directions to minimise disruption to the airflow through the bypass channel (48).

10. A heat exchanger bypass apparatus according to any one of claims 7 to 9 wherein the front and rear sections are moulded plastic components, with the side walls and internal partitions being integrally moulded parts of the front and rear panels.

11. A heat exchange ventilation unit comprising:
a housing (2) having an air supply inlet and an air supply outlet;
a heat exchanger (4) having an inlet and an outlet in fluid communication with the air supply inlet and the air supply outlet respectively; and
a heat exchanger bypass apparatus (32) according to any preceding claim having the bypass inlet (34) and the bypass outlet (35) in fluid communication with the air supply inlet and the air supply outlet respectively.

12. A heat exchange ventilation unit according to claim 11 wherein the housing comprises a supply air inlet chamber (10) contiguous with the supply inlet (8) and the heat exchanger (4) and the heat exchanger bypass apparatus (32) are both in open fluid communication with the supply inlet chamber (10).

13. A heat exchange ventilation unit according to claim 1 wherein the heat exchanger bypass apparatus (32) and heat exchanger (4) are arranged adjacent to each other and having coplanar inlets.

## Patentansprüche

1. Eine Wärmetauscher-Bypass-Vorrichtung, die Folgendes beinhaltet:
ein Gehäuse mit einem Bypass-Einlass (34) und einem Bypass-Auslass (35) zur Fluidkommunikation mit dem Luftzufuhreinlass bzw. dem Luftzufuhreinlass einer Lüftungseinheit;
einen Bypass-Luftkanal (48) innerhalb des Gehäuses, der sich zwischen dem Bypass-Einlass (34) und dem Bypass-Auslass (35) erstreckt;
eine drehbare Klappe (54), die sich in dem Bypass-Luftkanal (45) befindet und so angeordnet ist, dass sie sich zwischen einer offenen und einer geschlossenen Position dreht, in der sie den Bypass-Luftkanal (48) öffnet bzw. schließt; und
Dichtungsrippen (66), die sich an gegenüberliegenden Seiten des Bypass-Luftkanals (48) befinden, wobei die Rippen (66) und die drehbare Klappe (54) so angeordnet sind, dass die Klappe (54) mit den Dichtungsrippen (66) in Eingriff kommt und abdichtend an ihnen anliegt, wenn sie in der geschlossenen Position befindlich ist, um den Bypass-Luftkanal (48) zu schließen und abzudichten;
**gekennzeichnet durch**:
eine erste (50) und eine zweite (52) innere Trennwand, die sich in der Längsrichtung des Bypass-Luftkanals (48) erstrecken, wobei sich die erste innere Trennwand (50) zwischen den unteren Kanten des Bypass-Einlasses (34) und des Bypass-Auslasses (35) erstreckt und sich die zweite innere Trennwand (52) zwischen den oberen Kanten des Bypass-Einlasses (34) und des Bypass-Auslasses (35) erstreckt, wobei die erste (50) und die zweite (52) innere Trennwand eine gekrümmte Wellenform aufweisen, die so konfiguriert ist, dass sie Turbulenzen innerhalb des Bypass-Kanals (48) minimiert, und jede jeweils eine Kammer (51, 53) innerhalb des Gehäuses definiert, die von dem Bypass-Luftkanal (48) isoliert ist.

2. Wärmetauscher-Bypass-Vorrichtung gemäß Anspruch 1, wobei ein Aktor innerhalb der durch die erste innere Trennwand (50) definierten Kammer (51) untergebracht ist, der so angeordnet ist, dass er die Klappe (54) zwischen der offenen und der geschlossenen Position dreht.

3. Wärmetauscher-Bypass-Vorrichtung gemäß Anspruch 2, wobei der Bypass-Kanal (48) gegenüberliegende parallele Wände beinhaltet, die einen Teil des Kanals definieren, wobei die Klappe (54) so angeordnet ist, dass die Drehachse parallel zu den Wänden verläuft und sich die Klappe (54) in der geschlossenen Position quer über die Breite des Kanals (48) erstreckt, und wobei sich die Dichtungsrippen (66) an entsprechenden Stellen entlang der Länge des Bypass-Kanals (48), die mit der Klappe (54) zusammenfallen, in einer versetzten Anordnung befinden, sodass die Dichtungsrippen (66) mit gegenüberliegenden Flächen von gegenüberliegenden Seiten der Klappe (54) in Eingriff kommen, wenn sich die Klappe (54) in die geschlossene Position dreht.

4. Wärmetauscher-Bypass-Vorrichtung gemäß Anspruch 3, wobei ein Klappenblatt (56) mindestens zwei Dichtungsstreifen (68) beinhaltet, die sich in Längsrichtung entlang des Klappenblattes (56) erstrecken, wobei sich die Dichtungsstreifen (68) an den Außenkanten auf gegenüberliegenden Seiten und gegenüberliegenden Flächen des Klappenblattes (56) befinden, sodass sie mit den Dichtungsrippen (66) in Eingriff kommen und an diesen eine Abdichtung bereitstellen, wenn das Klappenblatt (56) in der geschlossenen Position befindlich ist.

5. Wärmetauscher-Bypass-Vorrichtung gemäß Anspruch 4, wobei sich die erste Kammer (51) in der Nähe eines ersten Endes der Klappe (54) befindet und sich die zweite Kammer (53) auf der gegenüberliegenden Seite des Gehäuses in der Nähe des zweiten Endes der Klappe (54) befindet und eine drehbare Halterung enthält, in der ein Vorsprung, der sich von dem zweiten Ende der Klappe (54) erstreckt, drehbar aufgenommen ist.

6. Wärmetauscher-Bypass-Vorrichtung gemäß einem der vorhergehenden Ansprüche, wobei sich die Dichtungsrippen (66) zwischen der ersten und der zweiten inneren Trennwand erstrecken.

7. Wärmetauscher-Bypass-Vorrichtung gemäß einem der vorhergehenden Ansprüche, wobei das Gehäuse einen vorderen und einen hinteren Abschnitt beinhaltet, die quer zu der Längsachse des Bypass-Kanals (48) angeordnet sind, wobei der vordere und der hintere Abschnitt zusammen das Gehäuse bilden und den Bypass-Kanal (48) definieren.

8. Wärmetauscher-Bypass-Vorrichtung gemäß Anspruch 7, die Stützelemente (43) beinhaltet, die sich von einer Innenwand mindestens eines von dem vorderen und dem hinteren Abschnitt erstrecken und sich innerhalb des Bypass-Kanals (48) befinden, um den vorderen und den hinteren Abschnitt zu stützen und die Trennung zwischen ihnen aufrechtzuerhalten.

9. Wärmetauscher-Bypass-Vorrichtung gemäß Anspruch 8, wobei sich die Stützelemente (43) in der Längsrichtung des Bypass-Kanals (48) in beiden Richtungen nach innen verjüngen, um die Störungen des Luftstroms durch den Bypass-Kanal (48) zu minimieren.

10. Wärmetauscher-Bypass-Vorrichtung gemäß einem der Ansprüche 7 bis 9, wobei es sich bei dem vorderen und dem hinteren Abschnitt um geformte Kunststoffkomponenten handelt, wobei die Seitenwände und die inneren Trennelemente einstückig geformte Teile des vorderen und des hinteren Panels sind.

11. Eine Wärmetauscher-Lüftungseinheit, die Folgendes beinhaltet:
ein Gehäuse (2) mit einem Luftzufuhreinlass und einem Luftzufuhrauslass;
einen Wärmetauscher (4) mit einem Einlass und einem Auslass, die in Fluidkommunikation mit dem Luftzufuhreinlass bzw. dem Luftzufuhrauslass stehen; und
eine Wärmetauscher-Bypass-Vorrichtung (32) gemäß einem der vorhergehenden Ansprüche, bei der der Bypass-Einlass (34) und der Bypass-Auslass (35) in Fluidkommunikation mit dem Luftzufuhreinlass bzw. dem Luftzufuhrauslass stehen.

12. Wärmeaustausch-Lüftungseinheit gemäß Anspruch 11, wobei das Gehäuse eine Zufuhrlufteinlasskammer (10) beinhaltet, die an den Zufuhreinlass (8) angrenzt, und der Wärmetauscher (4) und die Wärmetauscher-Bypass-Vorrichtung (32) beide in offener Fluidkommunikation mit der Zufuhreinlasskammer (10) stehen.

13. Wärmetauscher-Lüftungseinheit gemäß Anspruch 1, wobei die Wärmetauscher-Bypass-Vorrichtung (32) und der Wärmetauscher (4) benachbart angeordnet sind und koplanare Einlässe aufweisen.

## Revendications

1. Un appareil de contournement d'échangeur de chaleur comprenant :
une enceinte qui présente une entrée de contournement (34) et une sortie de contournement (35) pour communication fluidique avec l'entrée d'alimentation d'air et la sortie d'alimentation d'air d'une unité de ventilation respectivement ;
un canal d'air de contournement (48) au sein de l'enceinte qui s'étend entre l'entrée de contournement (34) et la sortie de contournement (35) ;
un registre (54) apte à effectuer une rotation placé au sein du canal d'air de contournement (45) agencé afin d'effectuer une rotation entre une position ouverte et
une position fermée dans lesquelles il ouvre et ferme le canal d'air de contournement (48) respectivement ; et
des nervures d'étanchéification (66) placées sur des côtés opposés du canal d'air de contournement (48), avec les nervures (66) et le registre (54) apte à effectuer une rotation qui sont agencés de telle sorte que le registre (54) se mette en prise et en aboutement de manière étanchéifiante avec les nervures d'étanchéification (66) lorsqu'il est dans la position fermée pour fermer et étanchéifier le canal d'air de contournement (48) ;
**caractérisé par** :
des première (50) et deuxième (52) parois de cloison interne qui s'étendent dans la direction longitudinale du canal d'air de contournement (48) avec la première paroi de cloison interne (50) qui s'étend entre les bords inférieurs de l'entrée de contournement (34) et de la sortie de contournement (35) et la deuxième paroi de cloison interne (52) qui s'étend entre les bords supérieurs de l'entrée de contournement (34) et de la sortie de contournement (35), les première (50) et deuxième (52) parois de cloison interne présentant une forme d'onde courbe configurée pour minimiser une turbulence au sein du canal de contournement (48) et définissant chacune une chambre (51, 53) au sein de l'enceinte qui est isolée du canal d'air de contournement (48).

2. Un appareil de contournement d'échangeur de chaleur selon la revendication 1 dans lequel un actionneur est logé au sein de la chambre (51) définie par la première paroi de cloison interne (50), lequel est agencé pour faire effectuer au registre (54) une rotation entre les positions ouverte et fermée.

3. Un appareil de contournement d'échangeur de chaleur selon la revendication 2 dans lequel le canal de contournement (48) comprend des parois parallèles opposées définissant une partie dudit canal avec le registre (54) qui est agencé de telle sorte que l'axe de rotation soit parallèle auxdites parois et dans la position fermée le registre (54) s'étend transversalement sur la largeur du canal (48), et dans lequel les nervures d'étanchéification (66) sont placées à des emplacements correspondants sur la longueur du canal de contournement (48) de manière coïncidente avec le registre (54) dans un agencement décalé de telle sorte que les nervures d'étanchéification (66) se mettent en prise avec des faces opposées de côtés opposés du registre (54) lorsque le registre (54) effectue une rotation jusqu'à la position fermée.

4. Un appareil de contournement d'échangeur de chaleur selon la revendication 3 dans lequel une lame de registre (56) comprend au moins deux bandes d'étanchéification (68) qui s'étendent dans le sens de la longueur le long de la lame de registre (56), les bandes d'étanchéification (68) étant placées au niveau des bords externes sur des côtés opposés et des faces opposées de la lame de registre (56) de telle sorte qu'elles se mettent en prise et réalisent une étanchéification contre les nervures d'étanchéification (66) lorsque la lame de registre (56) est dans la position fermée.

5. Un appareil de contournement d'échangeur de chaleur selon la revendication 4 dans lequel la première chambre (51) est placée à proximité d'une première extrémité du registre (54) et la deuxième chambre (53) étant placée sur le côté opposé de l'enceinte à proximité de la deuxième extrémité du registre (54) et contenant un bâti rotatif au sein duquel une saillie s'étendant depuis la deuxième extrémité du registre (54) est reçue de manière rotative.

6. Un appareil de contournement d'échangeur de chaleur selon n'importe quelle revendication précédente dans lequel les nervures d'étanchéification (66) s'étendent entre les première et deuxième parois de cloison interne.

7. Un appareil de contournement d'échangeur de chaleur selon n'importe quelle revendication précédente dans lequel l'enceinte comprend des sections avant et arrière agencées transversalement relativement à l'axe longitudinal du canal de contournement (48), les sections avant et arrière se combinant pour former l'enceinte et définir le canal de contournement (48).

8. Un appareil de contournement d'échangeur de chaleur selon la revendication 7 comprenant des montants (43) s'étendant depuis une paroi interne d'au moins une des sections avant et arrière et placés au sein du canal de contournement (48) pour soutenir et maintenir une séparation entre les sections avant et arrière.

9. Un appareil de contournement d'échangeur de chaleur selon la revendication 8 dans lequel les montants (43) s'effilent vers l'intérieur dans la direction longitudinale du canal de contournement (48) dans les deux sens pour minimiser une perturbation sur le flux d'air traversant le canal de contournement (48).

10. Un appareil de contournement d'échangeur de chaleur selon n'importe laquelle des revendications 7 à 9 dans lequel les sections avant et arrière sont des composants en plastique moulés, avec les parois latérales et les cloisons internes qui sont des pièces moulées de manière solidaire des panneaux avant et arrière.

11. Une unité de ventilation à échange de chaleur comprenant :
un boîtier (2) qui présente une entrée d'alimentation d'air et une sortie d'alimentation d'air ;
un échangeur de chaleur (4) qui présente une entrée et une sortie en communication fluidique avec l'entrée d'alimentation d'air et la sortie d'alimentation d'air respectivement ; et
un appareil de contournement d'échangeur de chaleur (32) selon n'importe quelle revendication précédente qui présente l'entrée de contournement (34) et la sortie de contournement (35) en communication fluidique avec l'entrée d'alimentation d'air et la sortie d'alimentation d'air respectivement.

12. Une unité de ventilation à échange de chaleur selon la revendication 11 dans laquelle le boîtier comprend une chambre d'entrée d'air d'alimentation (10) contiguë à l'entrée d'alimentation (8) et l'échangeur de chaleur (4) et l'appareil de contournement d'échangeur de chaleur (32) sont tous les deux en communication fluidique ouverte avec la chambre d'entrée d'alimentation (10).

13. Une unité de ventilation à échange de chaleur selon la revendication 1 dans laquelle l'appareil de contournement d'échangeur de chaleur (32) et l'échangeur de chaleur (4) sont agencés adjacents l'un à l'autre et en ayant des entrées coplanaires.
